Europäisches Patentamt

European Patent Office

Office européen des brevets

(11) Veröffentlichungsnummer: **0 014 855**
**B1**

(12) EUROPÄISCHE PATENTSCHRIFT

(45) Veröffentlichungstag der Patentschrift: 21.01.87

(51) Int. Cl.⁴: **C 08 G 8/24,** B 22 C 1/22

(21) Anmeldenummer: **80100360.9**

(22) Anmeldetag: **24.01.80**

(54) **Bindemittel für Giesserei-Formstoffmischungen.**

(30) Priorität: 03.02.79 DE 2904961

(43) Veröffentlichungstag der Anmeldung:
03.09.80 Patentblatt 80/18

(45) Bekanntmachung des Hinweises auf die
Patenterteilung:
21.01.87 Patentblatt 87/04

(84) Benannte Vertragsstaaten:
BE CH FR

(56) Entgegenhaltungen:
DE-A-1 770 816
DE-A-2 705 648
DE-C- 884 869
FR-A-2 340 351
GB-A-1 177 172
US-A-3 227 686

(73) Patentinhaber: **Hüttenes-Albertus Chemische-Werke GmbH**
**Wiesenstrasse 23-64**
**D-4000 Düsseldorf-Heerdt 11 (DE)**

(72) Erfinder: **Born, Thorwald, Dr. rer.nat. Dipl.-Chem.**
**Leipziger Strasse 89**
**D-3000 Hannover 1 (DE)**

(74) Vertreter: **Eikenberg, Kurt-Rudolf et al**
**Patentanwälte Dr. K.R. Eikenberg H.D.**
**Brümmerstedt und Uwe Thömen Schackstrasse 1**
**D-3000 Hannover 1 (DE)**

EP 0 014 855 B1

## 0 014 855

**Beschreibung**

Die Erfindung betrifft ein Bindemittel · für Gießerei-Formstoffmischungen, welches ein Phenol-Aldehyd-Kondensationsprodukt und ein Polyisocyanat in einem Lösungsmittel enthält und mit einem Härtungskatalysator unter Urethanbildung kalt aushärtet, wobei das Phenol-Aldehyd-Kondensationsprodukt durch Kondensation einer Phenolkomponente mit einem Aldehyd, vorzugsweise Formaldehyd, in Gegenwart eines Kondensationskondensators erhalten worden ist.

In der Gießereitechnik haben Bindemittelsysteme auf Polyurethanbasis, die das Reaktionsprodukt aus einem vernetzungsfähigen, reaktive OH-Gruppen enthaltenden Phenolharz und einem als Vernetzungsmittel dienenden Polyisocyanat sind, eine zunehmende Bedeutung, denn sie können je nach dem eingesetzten Härtungskatalysator innerhalb kurzer bis kürzester Zeiten (z.B. in der Größenordnung von weniger als 1 Minute) bei normaler Raumtemperatur ausgehärtet werden und ergeben gute Festigkeitswerte. Ein Beispiel für ein gebräuchliches Arbeitsverfahren, das solche Bindemittelsysteme benötigt, ist das "Coldbox-Verfahren" zur Herstellung von Gießerei-Formen und -Kernen. Bei diesem Verfahren wird eine aus Gießereisand, dem Phenolharz und dem Polyisocyanat (beides normalerweise in einem organischen Lösungsmittel gelöst) bestehende Formstoff-Mischung z.B. mittels einer Schießmaschine ausgeformt und der Formkörper anschließend durch Behandlung mit einem gasförmigen oder in einem Trägergas verteilten tertiären Amin als Katalysator gehärtet. Die Bindemittelsysteme auf Polyurethanbasis lassen sich aber auch anders verarbeiten. Beispielsweise kann auch so vorgegangen werden, daß der Härtungskatalysator in Form eines flüssigen Amins der Formstoff-Mischung bereits vor dem Ausformen zugesetzt wird. Weiterhin sind anstelle von Aminen auch andere Härtungskatalysatoren möglich.

Die für Gießerei-Bindemittelsysteme auf Polyurethanbasis geeigneten Phenolharze sind weitgehend wasserfrei und müssen so beschaffen sein, daß sie unter der Einwirkung des Härtungskatalysators mit den Polyisocyanaten rasch reagieren können, zu guten Anfangsfestigkeiten der Formkörper führen und nach Lagerung der Formkörper optimale Endfestigkeiten erreichen. Weiterhin sollen sie eine hohe lineare Struktur und damit eine geringe Viskosität aufweisen, um das Fließverhalten der Formstoff-Mischung zu begünstigen. Außerdem müssen sie im gelösten Zustand möglichst stabil sein, d.h. ihre Lösungen dürfen beispielsweise keine Tendenz zur Entmischung zeigen. Beispiele für in dieser Richtung entwickelte Phenolharztypen, die auch Eingang in die Praxis gefunden haben, sind in den DE—ASn 1 583 521, 1 720 204 und 1 920 759 beschrieben. Diese bekannten Phenolharztypen werden durch Kondensation einer Phenolkomponente mit einem Aldehyd, vorzugsweise Formaldehyd, hergestellt, wobei die Kondensation so geführt wird, daß sich sogenannte "Benzyläther-Phenolharz" ergeben. Unter diesem Begriff sind Phenolharze mit einem Gehalt an endständigen Methylolgruppen zu verstehen, bei denen die einzelnen Phenolkerne überwiegend in linearer o-o'-Verknüpfung, ggfs. aber auch in o-p-Verknüpfung, teils über Methylenbrücken und teils über Methylenätherbrücken miteinander verbunden sind. Als Phenolkomponente wird dabei das eigentliche (unsubstituierte) Phenol eingesetzt oder aber ein substituiertes Phenol, bei dem mindestens beide o-Stellungen unbesetzt sind.

Diese bekannten Phenolharztypen erfüllen jedoch die praktischen Anforderungen noch nicht in jeder Hinsicht befriedigend. So lassen sie sich beispielsweise zwar bei Raumtemperatur der Formstoff-Mischung, nicht aber bei tieferen, durchaus nicht selten vorkommenden Temperaturen bis zu 0°C oder darunter rasch genug unter Erreichung ausreichender Anfangsfestigkeiten aushärten. Vor allem aber—und das dürfte der wesentliche Nachteil der bekannten Phenolharztypen sein—können sie nicht in unpolaren Lösungsmitteln gelöst werden, sondern erfordern polare Lösungsmittel. Da andererseits die Polyisocyanate mit polaren Lösungsmitteln nur schlecht, mit unpolaren, vorzugsweise armatischen Lösungsmitteln dagegen gut verträglich sind, muß für die Formstoff-Mischung als Kompromiß ein Gemisch aus unpolaren und polaren Lösungsmitteln verwendet werden. Das führt zu einer relativ kurzen Verarbeitungszeit der Formstoff-Mischung (das ist die "Lebensdauer", innerhalb der eine fertig angemischte Formstoff-Mischung lagerfähig bleibt und noch zu Formkörpern von ausreichender Festigkeit verarbeitet werden kann), offenbar weil durch den Anteil an polaren Lösungsmitteln bereits Vernetzungsreaktionen ausgelöst werden. Hinzu kommt noch, daß viele der gängigen polaren Lösungsmittel, wie z.B. Isophoron oder Äthyl-iso-amylketon, sehr geruchsintensiv oder sogar toxisch sind, und daß auch auf eine Verträglichkeit der Bestandteile des Lösungsmittel-Gemisches geachtet werden muß, wodurch die Auswahl an möglichen Lösungsmitteln stark eingeengt wird.

Aus der DE—A 27 05 648 sind bereits härtbare Massen bekannt, die aus einem öllöslichen Phenolharz und einem damit unter Urethanbildung reaktionsfähigen Isocyanat in Gegenwart eines Katalysators, z.B. eines Metallionenkatalysators gebildet werden, wobei das Phenolharz auf p-substituierten Phenolen basiert, die einen kleinen Anteil von vorzugsweise weniger als 20 Gew.-% unsubstituierte Phenole enthalten können. Die Reaktanten sind dabei in einem Petroleumöl, also einem unpolaren Lösungsmittel gelöst, welches so beschaffen und auf die Reaktanten abgestimmt ist, daß es sich während der Urethabildung als isolierte Phase abscheidet. Dadurch wird die Reaktionsmischung mit Wasser verträglich und kann sogar mit Wasser gestreckt werden. Diese bekannten Massen dienen zur Herstellung massiver Körper, welche ganz oder (mit Füllstoffen versehen) überwiegend aus dem Kunstharz bestehen, gut bearbeitbar sind und nur wenig schrumpfen. Als Bindemittel für Gießerei-Formstoffmischungen sind sie jedoch weder bestimmt noch geeignet, wie in der DE—A 27 05 648 ausdrücklich vermerkt ist.

2

Mit der Erfindung soll nunmehr ein Bindemittel für Gießerei-Formstoffmischungen geschaffen werden, welches die praktischen Anforderungen der Gießereitechnik auch dahingehend erfüllt, daß es bei tieferen Temperaturen bis 0°C und darunter genau einsatzfähig ist wie bei Raumtemperatur und daß es zu Formstoff-Mischungen führt, die bei allen Temperaturen eine sehr lange Verarbeitungszeit aufweisen.

Dieses Ziel erreicht die Erfindung dadurch, daß das Phenol-Aldehyd-Kondensationsprodukt mit einem Gemisch aus 85—60 Gew.-% unsubstituiertem Phenol und 15 bis 40 Gew.-% eines p-substituierten Phenols als Phenolkomponente bei einem Molverhältnis von Gesamt-Phenol zu Aldehyd im Bereich von 1:1,0 bis 1:1,5 in Gegenwart von 0,01 bis 0,1 Gew.-%, bezogen auf die gesamte Phenolkomponente, eines Metallsalzes einer höheren Carbonsäure mit mehrwertigen Metallen als Kondensationskatalysator im wasserhaltigen Medium bei einer Temperatur bis 100°C beginnend und unter langsamer Abtrennung des Wassers bei einer Temperatur bis 125°C endend kondensiert und nach Abtrennung des Wassers in einem unpolaren Lösungsmittel gelöst ist. Zweckmäßig enthält die Lösung des Phenol-Aldehyd-Kondensationsproduktes dabei 50—55 Gew.-% Kondensationsprodukt und 50—45 Gew.-% aromatische Kohlenwasserstoffe.

Das erfindungsgemäße Bindemittel unterscheidet sich im Aufbau, in der Anwendung und auch in der Herstellungsweise grundlegend von allen bekannten, für das Coldbox-Verfahren oder entsprechende Arbeitsverfahren entwickelten Phenolharztypen, was nachfolgend im einzelnen dargelegt wird.

Der aufbaumäßige Unterschied zu den bekannten Phenolharztypen liegt in der Phenolkomponente. Während die bekannten Typen entweder das unsubstituierte Phenol oder aber ein substituiertes Phenol (einschließlich auch der p-substituierten Phenole) und damit in jedem Fall eine in sich einheitliche Phenolkomponente einsetzen, ist es für die Erfindung eine zwingende Bedingung, daß die Phenolkomponente ein Gemisch aus unsubstituiertem Phenol und einem p-substituierten Phenol sein muß. Durch diesen Gehalt an einem p-substituiertem Phenol ergibt sich eine verstärkte lineare Harzstruktur mit niedriger Viskosität, die für eine Verbesserung der Verarbeitungseigenschaften des Bindemittels als mit-ursächlich angesehen werden kann. Besonders überraschend ist es dabei, daß dieser Effekt nur innerhalb der weiter vorn angegebenen Grenzwerte für den Gehalt an dem p-substituierten Phenol eintritt, also nicht linear zum Mischungsverhältnis verläuft.

Die Substituenten des p-substituierten Phenols haben auf die angestrebten Eigenschaften des erfindungsgemäßen Bindemittels keinen ausgeprägten Einfluß. Lediglich die Viskosität des Bindemittels wird bei höherem Molekulargewicht der Substituenten etwas höher, weshalb dann etwas mehr in Richtung auf den oberen Grenzwert orientierte Gehalte an dem p-substituierten Phenol zweckmäßig sein können. Als Substituenten kommen vorzugsweise gerade oder verzweigte Alkylgruppen in Frage, aber auch Alkylengruppen, Arylgruppen oder andere cyclische Gruppen und ebenfalls Alkyloxygruppen, Aryloxygruppen, Halogengruppen, Nitrogruppen, Säuregruppen, Estergruppen und dergl. Gruppen, sofern sie nicht so beschaffen sind, daß sie die Kondensationsreaktion behindern. Typische und auch von den Kosten der günstige Beispiele sind p-Kresol, p-tert-Butylphenol, p-Octylphenol, p-Nonylphenol, p-(Äthylcyclohexyl)phenol, p-Cyclohexylphenol usw.

Das erfindungsgemäße Bindemittel läßt sich mit allen in der Gießereitechnik üblichen und bekannten Polyisocyanaten kombinieren und benötigt ein tertiäres Amin oder einen anderen, die Urethanbildung katalysierenden Härtungskatalysator. Bei der Verarbeitung z.B. im Coldbox-Verfahren härtet es in der erforderlichen sehr kurzen Zeit aus und ergibt die gleichen Festigkeitswerte, die auch mit den bekannten Phenolharztypen bei sofortiger Verarbeitung erreicht werden können. Durch Säuren oder in der Hitze läßt es sich nicht aushärten. Auf der anderen Seite ist seine gute Reaktionsfähigkeit mit Polyisocyanaten kaum temperaturabhängig, sie bleibgt insbesondere auch bei tiefen Temperaturen der Formstoff-Mischung (bis unter 0°C) praktisch voll erhalten. Dies ist ein wichtiger Vorteil der Erfindung.

Der verwendungsmäßige Unterschied zu den bekannten Phenolharztypen liegt darin, daß mit dem erfindungsgemäßen Bindemittel Formstoff-Mischungen unter Einsatz von nur unpolaren Lösungsmitteln hergestellt werden können, d.h. polare Lösungsmittel müssen vermieden werden, weil sie den Erfolg der Erfindung beeinträchtigen. Bevorzugt werden diejenigen unpolaren aromatischen Lösungsmittel, die auch für die Polyisocyanate die bevorzugten Lösungsmittel darstellen, nämlich hochsiedende aromatische Kohlenwasserstoffe mit einem Siedebereich von 150—250°C. Es können aber auch nichtaromatische unpolare Lösungsmittel verwendet oder zugesetzt werden, wie Terpene und dergl. Cyclophaten, und ggfs. auch aliphatische Kohlenwasserstoffe. In jedem Fall sind die Bindemittel-Lösungen bei allen Temperaturen ganz ausgezeichnet stabil.

Durch den Einsatz von nur unpolaren Lösungsmitteln, der bei keinem der bisher bekannten, für Polyurethansysteme entwickelten Phenolharzen möglich ist und der einen ganz entscheidenden Vorteil der Erfindung darstellt, entsteht, in der Formstoff-Mischung ein hinsichtlich aller Bestandteile ausgezeichnet verträgliches System von hoher Stabilität. Weiterhin verlängert sich die Verarbeitungszeit der fertigen Formstoff-Mischung auf Werte, wie sie bislang noch nicht erreicht werden konnten. Dies ist eine direkte Folge der Tatsache, daß kein polares Lösungsmittel vorhanden ist, welches in der Formstoff-Mischung Vernetzungsrekationen auslösen oder begünstigen kann. Ausserdem sind unpolare aromatische Lösungsmittel auch so stark hydrophob, daß die fertige Formstoff-Mischung eine nur geringe Feuchtigkeitsempfindlichkeit zeigt, was ebenfalls zur Stabilität beiträgt. Nebenbei vermindert sich durch das Fehlen von polaren Lösungsmitteln aber auch die Klebneigung der Formstoff-Mischung, da die

0 014 855

Wechselwirkung mit der (aus z.B. Holz, Kunststoff oder Metall bestehenden) Oberfläche der Kern- und Formkästen geringer wird.

Die erheblich gesteigerte Stabilität des das erfindungsgemäße Bindemittel enthaltenden Systems wird im übrigen auch durch sein Verhalten bei der Silanisierung deutlich. Es ist üblich, Coldbox-Bindemitteln eine gewisse Menge (in der Größenordnung bis etwa 1 Gew.% und mit der Polarität des verwendeten Lösungsmittels steigend) eines Silans zuzusetzen, um die Stabilität des Systems zu erhöhen und dadurch zu höheren Festigkeitswerten zu kommen. Bei den bekannten Phenolharztypen führt dabei die Silanisierung zu einer markanten Festigkeitserhöhung, während sie sich bei dem erfindungsgemäßen Bindemittel nur unwesentlich auswirkt. Mithin ist ein das erfindungsgemäße Bindemittel enthaltendes System in sich bereits so stabil, daß es einer Silanisierung kaum noch bedarf.

Infolge der niedrigen Harzviskosität im Verein mit dem Einsatz von nur unpolaren Lösungsmitteln zeigen die mit dem erfindungsgemäßen Bindemittel hergestellten Formstoff-Mischungen ein ausgezeichnetes Fließ- und Ausschießverhalten, das sich besonders positiv bei komplizierten Formen und Kernen auswirkt. Auch in diesem Punkt ist das erfindungsgemäße Bindemittel den bisherigen Bindemitteln überlegen.

Der verfahrensmäßige Unterschied zu den bekannten Phenolharztypen liegt darin, daß die Kondensationsreaktion weitgehend im wasserhaltigen Medium mit einer geringeren Aldehydmenge durchgeführt wird und daß auch die Menge an Kondensationskatalysator beträchtlich geringer ist. Zur Herstlelung der bekannten Phenolharztypen für das Coldbox-Verfahren werden nämlich Phenol und Formaldehyd im Molverhältnis von mehr als 1:1,5 in Gegenwart von rund 1—2 Gew.% eines Metallsalzes einer höheren Carbonsäure (z.B. Zinknaphthenat oder Bleineodecanoat) als Kondensationskatalysator bei Temperaturen bis zu etwa 130°C zur Reaktion gebracht, und zwar unter praktisch wasserfreien Bedingungen, indem das gebildete Reaktionswasser laufend abgetrennt wird. Diese Verfahrensweise mag für die besondere Verknüpfung der Phenolkerne, die bei den bisherigen Coldbox-Bindemitteln angestrebt wird, günstig oder notwendig sein, sie hat aber einen relativ hohen Restgehalt des Bindemittels an freiem Phenol und freiem Formaldehyd zur Folge.

Demgegenüber führt die erfindungsgemäße Verfahrensweise zu dem Vorteil, daß die (aus dem unsubstituierten Phenol und dem p-substituierten Phenol bestehende) Phenolkomponente in der Kondensationsreaktion besser mit dem Aldehyd (normalerweise Formaldehyd) umgesetzt wird, so daß im Harz sowohl der freie Phenolgehalt als auch der freie Formaldehydgehalt niedriger liegen als üblich. Dadurch werden bei der Herstellung und Verarbeitung der Formstoff-Mischungen die vom Phenol und vom Formaldehyd ausgehenden Geruchsbelästigungen und Umweltbelastungen auf ein Minimum herabgesetzt, was sich deshalb besonders vorteilhaft auswirkt, weil zugleich auch die durch polare Lösungsmittel verursachten Geruchsbelästigungen zum Fortfall gekommen sind.

Als Kondensationskatalysator kommen für das erfindungsgemäße Verfahren die bekannten Katalysatoren infrage, nämlich in organischen Lösungsmitteln lösliche Metallsalze von höheren Carbonsäuren, insbesondere von Fettsäuren, mit Mn, Co, Zn, Pb, Sn und dergl. als Metall. Diese werden jedoch in einer wesentlich geringeren Menge von nur 0,01 bis 0,1 Gew.% und vorzugsweise 0,02 bis 0,06 Gew.% eingesetzt. Überraschend wurde dabei gefunden, daß eine größere Katalysator-Menge keine brauchbaren Ergebnisse mehr bringt.

Nachfolgend wird die Erfindung anhand von Ausführungsbeispielen näher erläutert. Dabei werden zunächst die Herstellung des Bindemittels und dessen Verarbeitung bei Anwendung des Coldbox-Verfahrens beschrieben, und anschließend werden einzelne mit erfindungsgemäßen und nicht-erfindungsgemäßen Proben erzielten Ergebnisse dargelegt.

A. Herstellung des Bindemittels

In einer Glasapparatur von 2 l Inhalt, die mit Innenthermometer, Rührer und Kühler versehen war, wurden 8,8 Mol einer Phenolkomponente (in Form eines Gemisches aus 91%igem verflüssigtem Phenol und einem p-substituierten Phenol), 13,0 Mol Formaldehyd (als Paraformaldehyd) sowie eine Menge von 0,01 bis 0,1 Gew.%, bezogen auf die Phenolkomponente, an Zinkoctoat als Kondensationskatalysator vorgelegt und 60 bis 180 min. bei 95°C gehalten, wobei eine klare Lösung entstand. Durch den Start im wasserhaltigen Medium wird dabei das Formaldehyd als Hydrat gebunden und im Reaktionssystem gehalten.

Anschließend wurde das Wasser aus dem Reaktionssystem abdestilliert und die Temperatur auf 115°C gesteigert. Nach einer Standzeit von 60 min. bei 115°C wurde, bei gleichzeitiger Destillation, die Temperatur auf 125°C erhöht. Anschließend folgte eine Verkochungszeit von etwa 60 bis 180 min. bei 115°C, bis eine Viskosität von 100 Poise (20°C) erreicht war. Danach wurde im Vakuum bis zur einer Produkttemperatur von 120°C ausdestilliert. Sobald kein Destillat mehr überging, wurde der Ansatz abgekühlt und mit dem Lösungsmittel versetzt.

Bei Verwendung von nur aromatischen Kohlenwasserstoffen (Siedebereich 160 bis 180°C; 50 bis 55% Harz und 50 bis 45% Lösungsmittel) ergaben sich stabile und klare Harzlösungen mit einer Viskosität im Bereich von 0,2 bis 0,6 Poise (20°C), während bei Zusatz von polaren Lösungsmitteln die Viskositäten höher lagen. Die Ausbeuten betrugen ca. 70 bis 80%, bezogen auf den Rohstoffeinsatz.

Der freie Phenolgehalt des Harzes lag bei maximal 4,5%, was deutlich niedriger ist als der bisher übliche Gehalt von 6 bis 9% an freiem Phenol. Daher braucht das Harz nicht mehr als "giftige Zubereitung"

4

**0 014 855**

gekennzeichnet zu werden. Auch der freie Formaldehydgehalt des Harzes ist deutlich niedriger als bisher. Bei der Verarbeitung des Harzes ergaben Messungen am Mischerrand einen Wert von 1 bis 2 ppm, im Vergleich zu den bisher üblichen Werten von 5—25 ppm. Das Harz ist also ausgesprochen umweltfreundlich.

B. Verarbeitung des Bindemittels im Coldbox-Verfahren

Es wurden 100 Gewichtsteile Gießereisand H32 sowie 1 Gewichtsteil der nach A erhaltenen Harzlösung und 1 Gewichtsteil einer Polyisocyanatlösung (bestehend aus 85% technischem Polyisocyanat auf Basis Diphenylmethandiisocyanat und 15% aromatischen Kohlenwasserstoffen mit einem Siedebereich von 160 bis 180°C) ggfs. unter Zusatz eines Silans, miteinander zu einer Formstoff-Mischung gemischt, wobei zunächst die Harzlösung und dann die Polyisocyanatlösung dem Sand zugesetzt wurde.

Diese Formstoff-Mischung wurde entweder sofort oder nach einer vorbestimmten Verarbeitungszeit (d.h. nach Lagerung im gemischten, aber noch nicht ausgehärteten Zustand) in einer Schießmaschine zu Formkörpern ausgeformt, die anschließend durch übliche Begasung mit einem tertiären Amin ausgehärtet wurden. Die ausgehärteten Formkörper wurden danach auf ihre Festigkeiten untersucht.

C. Eigenschaften der erhaltenen Formkörper

Die Eigenschaften der ausgehärteten Formkörper sind zusammen mit den erforderlichen individuellen Daten in den beigefügten Tabellen zusammengefaßt.

Die Tabelle 1 veranschaulicht am Beispiel eines in den erfindungsgemäßen Bereich fallenden Bindemittels, daß gute Festigkeitswerte erreicht werden und daß vor allem die Festigkeitswerte auch über lange Verarbeitungszeiten hinweg sehr gut konstant bleiben. Nach 180 min. Verarbeitungszeit sind z.B. die Endfestigkeiten (7-Tage-Werte) erst um 23% abgefallen. Bei den bisherigen Phenolharztypen haben dagegen nach dieser oder sogar einer noch kürzeren Verarbeitungszeit die Festigkeiten zumeist bereits den Bereich so geringer Werte erreicht, wie sie für das der Tabelle 1 zugrundeliegende Bindemittel erst nach 300 min. Verarbeitungszeit eintreten.

Der Tabelle 2 liegt das gleiche Bindemittel zugrunde wie der Tabelle 1, und es ist der Einfluß der Verarbeitungstemperaturen dargestellt. Dabei ist deutlich zu erkennen, daß die Eigenschaften der gebildeten Formkörper nicht nur bei sofortiger Verarbeitung, sondern auch nach Ablauf einer Verarbeitungszeit von 60 min. praktisch unabhängig von den Verarbeitungstemperaturen sind.

Für wiederum das gleiche Bindemittel ist in Tabelle 3 der Einfluß unterschiedlicher Lösungsmittel (einschließlich der nicht-erfindungsgemäßen polaren Lösungsmittel) und in Tabelle 4 der Einfluß eines Silanzusatzes deutlich gemacht. Diesen Tabellen ist zu entnehmen, daß die Festigkeiten (insbesondere die 7-Tage-Werte) bei sofortiger Verarbeitung und auch bei Einhaltung einer Verarbeitungszeit von 60 min. geringer werden, wenn das Lösungsmittel einen Anteil an einer polaren Komponente enthält, und daß sich ein Silan-Zusatz bei den erfindungsgemäß eingesetzten unpolaren Lösungsmitteln wesentlich geringer auswirkt als bei Lösungsmitteln mit einem Gehalt an einer polaren Komponente.

Die Tabelle 5 schließlich zeigt die Grenzwerte auf für den Gehalt des Bindemittels an dem p-substituierten Phenol und für die eingesetzte Menge an Kondensationskatalysator. Bei Gehalten von 10% an p-substituiertem Phenol (nicht mehr erfindungsgemäß) werden zwar noch gute Festigkeiten und auch noch brauchbare Verarbeitungszeiten erreicht, aber die Stabilität der Harzlösungen ist bei Temperaturen unterhalb 20°C nicht mehr gegeben. Umgekehrt sinken bei Gehalten von 49% an p-substituiertem Phenol (ebenfalls nicht mehr erfindungsgemäß) die Festigkeiten und Verarbeitungszeiten ab. Katalysatormengen von mehr als 0,01% (auch nicht mehr erfindunsgemäß) führen zu unerwünscht hohen Viskositäten bzw. wiederum zu unbefriedigenden Festigkeiten.

5

TABELLE 1

Bindemittel wie unter A hergestellt mit
 Phenolkomponente: 23 Gew.% p-tert.-Butylphenol Rest unsubstituiertes Phenol
 Kondensationskatalysator: 0,02 Gew.% Zinkoctoat
 Harzlösung: 55% Harz
  45% aromatische Kohlenwasserstoffe
  mit Siedebereich 160—180°C.

Verarbeitung wie unter B angegeben mit
 Temperatur: 25°C kein Silanzusatz

Biegefestigkeiten in N/cm²

| Verarbeitung der Formstoff-Mischung | Prüfung der ausgehärteten Formkörper | | | | |
|---|---|---|---|---|---|
| | sofort | 45' | 24 h | 48 h | 7 Tg. |
| sofort | 235 | 490 | 519 | 530 | 510 |
| nach 60 min. | 226 | 471 | 550 | 519 | 510 |
| nach 120 min. | 206 | 422 | 481 | 451 | 451 |
| nach 180 min. | 167 | 343 | 402 | 392 | 392 |
| nach 240 min. | 127 | 245 | 304 | 304 | 304 |
| nach 300 min. | 88 | 206 | 235 | 216 | 235 |

TABELLE 2

Bindemittel wie bei Tabelle 1, jedoch
 Harzlösung: 50% Harz
  50% aromatische Kohlenwasserstoffe mit Siedebereich 160—180°C

Verarbeitung wie bei Tabelle 1, jedoch
 Temperaturen: Bereich I: Sand 20—22°C
  Mischung 23—25°C
  Raum 19—22°C
  Bereich II: Sand 2—3°C
  Mischung 8—10°C
  Raum 1—5°C

Biegefestigkeiten in N/cm²

| Verarbeitung der Formstoff-Mischung | Prüfung der ausgehärteten Formkörper | | | |
|---|---|---|---|---|
| | sofort | 45' | 24 h | 7 Tg |
| sofort bei Temp. I | 206 | 540 | 648 | 677 |
| nach 60 min. bei Temp. I | 206 | 490 | 598 | 628 |
| sofort bei Temp. II | 196 | 451 | 549 | 549 |
| nach 60 min. bei Temp. II | 196 | 343 | 441 | 441 |

TABELLE 3

Bindemittel wie bei Tabelle 1, jedoch
Harzlösung: 50% Harz
50% Lösungsmittel,
Lösungsmittel: aromatische Kohlenwasserstoffe mit Siedebereich 160—180°C, entweder rein oder
mit den unten angegebenen Gehalten an weiteren Lösungsmitteln.

Verarbeitung wie bei Tabelle 1.

Biegefestigkeiten in N/cm².

| Lösungsmittel: | Mischung sofort verarbeitet | | | | | Mischung 60' gelagert | | | | |
|---|---|---|---|---|---|---|---|---|---|---|
| | Prüfung der ausgehärteten Formkörper | | | | | | | | | |
| Aromaten mit | sof. | 45' | 24' | 48' | 7 Tg. | sof. | 45' | 24' | 48' | 7 Tg. |
| keinem Zusatz | 216 | 490 | 549 | — | 588 | 216 | 412 | 540 | — | 598 |
| 20% Acetaldehyd-diethylacetat | 226 | 441 | 490 | — | 549 | 226 | 412 | 490 | — | 500 |
| 20% Dibutylsebacat | 235 | 480 | 490 | 480 | 441 | 235 | 480 | 510 | 480 | 412 |
| 20% n-Hexylacetat | 216 | 462 | 412 | 382 | 363 | 216 | 432 | 373 | 382 | 333 |
| 20% Isophoron | 166 | 392 | 333 | 323 | 323 | 177 | 382 | 402 | 382 | 304 |
| 10% Acetessigester | 196 | 462 | 471 | — | 559 | 206 | 402 | 470 | — | 530 |
| 20% DL-Limonen (Terpen) | 206 | 471 | 677 | — | 765 | 235 | 500 | 687 | — | 775 |
| 40% DL-Limonen (Terpen) | 196 | 510 | 627 | — | 755 | 245 | 530 | 647 | — | 755 |
| 50% DL-Limonen (Terpen) | 216 | 500 | 678 | — | 765 | 265 | 530 | 657 | — | 765 |

# 0 014 855

TABELLE 4

Bindemittel wie bei Tabelle 3, jedoch
Harzlösung: 55% Harz
45% Lösungsmittel

Verarbeitung wie bei Tabelle 1, jedoch entweder mit 0,3 Gew.% Silanzusatz (S) oder ohne Silanzusatz (O)

Biegefestigkeiten in N/cm$^2$.

| Lösungsmittel: | | Mischung sofort verarbeitet | | | | | Mischung 60' gelagert | | | | |
|---|---|---|---|---|---|---|---|---|---|---|---|
| | | Prüfung der ausgehärteten Formkörper | | | | | | | | | |
| Aromaten mit | | sof. | 45' | 24' | 48' | 7 Tg. | sof. | 45' | 24' | 48' | 7 Tg. |
| keinem Zusatz | S | 285 | 539 | 638 | 647 | 667 | 275 | 480 | 569 | 588 | 657 |
| 11% n-Hexylacetat | S | 245 | 500 | 451 | 441 | 441 | 225 | 441 | 422 | 422 | 402 |
| 22% n-Hexylacetat | S | 216 | 461 | 412 | 382 | 363 | 216 | 432 | 373 | 382 | 353 |
| 33% Isophoron | S | 206 | 480 | 343 | 343 | 333 | 186 | 441 | 363 | 333 | 304 |
| 33% DL-Limonen (Terpen) | S | 285 | 520 | 647 | 696 | 735 | 343 | 549 | 628 | 677 | 735 |
| 66% DL-Limonen (Terpen) | S | 294 | 579 | 638 | 667 | 708 | 265 | 500 | 637 | 657 | 706 |
| | | | | | | | | | | | |
| keinem Zusatz | O | 285 | 490 | 530 | — | 569 | 255 | 461 | 530 | — | 529 |
| 33% Dibutylsebacat | O | 275 | 432 | 382 | — | 275 | 255 | 422 | 422 | — | 304 |
| 33% Isophoron | O | 196 | 432 | 225 | 186 | 147 | 176 | 363 | 245 | 176 | 137 |

8

# 0 014 855

## TABELLE 5

Bindemittel wie in Tabelle 1, jedoch
Phenolkomponente: mit unterschiedlichem, unten angegebenem Gehalt an p-substituiertem Phenol
Kondensationskatalysator: unterschiedliche, unten angegebene Menge an Zinkoctoat

Verarbeitung wie in Tabelle 1

Biegefestigkeiten in N/cm².

| Probe Nr. | Katalysator % | p-substit. Phenol % | Viskosität $10^{-1}$ Pa.s (Poise) | Prüfung der ausgehärteten Formkörper | | |
|---|---|---|---|---|---|---|
| | | | | sofort | 24 h | 48 h |
| 1 | 0,01 | 10 | 0,27 | 98 | 491 | 520 |
| 2 | 0,02 | 10 | 0,51 | 186 | 579 | 589 |
| 3 | 0,06 | 10 | 0,80 | 226 | 628 | 608 |
| 4 | 0,12 | 10 | 2,20 | 255 | 530 | 540 |
| 5 | 0,01 | 23 | 0,20 | 168 | 598 | 598 |
| 6 | 0,02 | 23 | 0,31 | 206 | 579 | 589 |
| 7 | 0,06 | 23 | 0,62 | 255 | 559 | 569 |
| 8 | 0,12 | 23 | 1,52 | 235 | 510 | 471 |
| 9 | 0,01 | 36 | 0,23 | 177 | 540 | 559 |
| 10 | 0,02 | 36 | 0,30 | 206 | 530 | 549 |
| 11 | 0,06 | 36 | 0,39 | 216 | 510 | 510 |
| 12 | 0,12 | 36 | 0,69 | 216 | 491 | 471 |
| 13 | 0,01 | 49 | 0,20 | 167 | 451 | 432 |
| 14 | 0,02 | 49 | 0,24 | 167 | 451 | 422 |
| 15 | 0,06 | 49 | 0,29 | 186 | 412 | 392 |
| 16 | 0,12 | 49 | 0,56 | 167 | 392 | 373 |

**Patentansprüche**

1. Bindemittel für Gießerei-Formstoffmischungen, welches ein Phenol-Aldehyd-Kondensationsprodukt und ein Polyisocyanat in einem Lösungsmittel enthält und mit einem Härtungskatalysator unter Urethanbildung kalt aushärtet, wobei das Phenol-Aldehyd-Kondensationsprodukt durch Kondensation einer Phenolkomponente mit einem Aldehyd, vorzugsweise Formaldehyd, in Gegenwart eines Kondensationskatalysators erhalten worden ist, dadurch gekennzeichnet, daß das Phenol-Aldehyd-Kondensationsprodukt mit einem Gemisch aus 85—60 Gew.-% unsubstituiertem Phenol und 15 bis 40 Gew.-% eines p-substituierten Phenols als Phenolkomponente bei einem Molverhältnis von Gesamt-Phenol zu Aldehyd im Bereich von 1:1,0 bis 1:1,5 in Gegenwart von 0,01 bis 0,1 Gew.-%, bezogen auf die gesamte Phenolkomponente, eines Metallsalzes einer höheren Carbonsäure mit mehrwertigen Metallen als Kondensationskatalysator in wasserhaltigen Medium bei einer Temperatur bis 100°C beginnend und unter langsamer Abtrennung des Wassers bei einer Temperatur bis 125°C endend kondensiert und nach Abtrennung des Wassers in einem unpolaren Lösungsmittel gelöst ist.

2. Bindemittel nach Anspruch 1, dadurch gekennzeichnet, daß die Lösung des Phenol-Aldehyd-Kondensationsproduktes 50 bis 55 Gew.-% Kondensationsprodukt und 50 bis 45 Gew.% aromatische Kohlenwasserstoffe enthält.

9

**Revendications**

1. Liant pour mélanges de matériaux de moule de fonderie qui contient un produit de condensation de phénol-aldéhyde et un polyisocyanate dans un solvant et durcit à froid avec un catalyseur de durcissement avec formation d'uréthane, dans lequel le produit de condensation phénolaldéhyde a été obtenu par condensation d'un composant phénol avec une aldéhyde, de préférence, le formaldéhyde, en présence d'un catalyseur de condensation, caractérisé en ce que le produit de condensation phénol-aldéhyde est, au début au milieu aqueux à une température allant jusqu'à 100°C et à la fin avec élimination lente de l'eau à une température allant jusqu'à 125°C, condensé avec un mélange de 85 à 60% en poids de phénol non substitué et 15 à 40% en poids d'un phénol p-substitué, comme composant phénol, dans une proportion en moles de l'ensemble phénol par rapport à l'aldéhyde située dans une plage de 1/1,0 à 1/1,5 en présence de 0,01 à 0,1 en poids, par rapport au composant phénol global, d'un sel métallique d'un acide carboné supérieur avec des métaux polyvalents, comme catalyseur de condensation, et, après l'élimination de l'eau, dissous dans un solvant non polaire.

2. Liant selon la revendication 1, caractérisé en ce que la solution de produit de condensation phénol-aldéhyde contient 50 à 56% en poids d'hydrocarbure aromatique.

**Claims**

1. Binder for foundry moulding mixtures and containing a phenol-aldehyde condensation product and a polyisocyanate in a solution and which, with a hardening catalyst, hardens out cold forming urethane, the phenol-aldehyde condensation product having been obtained by condensation of a phenol component with an aldehyde, preferably formaldehyde, in the presence of a condensation catalyst, characterised in that the phenol-aldehyde condensation product is condensed with a mixture comprising 85 to 60% by weight of unsubstituted phenol and 15 to 50% by weight of a p-substituted phenol as a phenol component with a molar ratio of total phenol to aldehyde in the range from 1:1.0 to 1:1.5 in the presence of 0.01 to 0.1% by weight, in relation to the total phenol component, of a metal salt of a higher carboxylic acid with multivalent metals as the condensation catalyst, and in a water-containing medium at a temperature of up to 100°C at the beginning and with slow removal of water at a temperature of up to 125°C at the end, and, after removal of the water, is dissolved in a non-polar solvent.

2. Binder according to claim 1, characterised in that the solution of phenol-aldehyde condensation product contains 50 to 55% by weight of condensation product and 50 to 45% by weight of an aromatic hydrocarbon.